# EUROPÄISCHE PATENTSCHRIFT

(11) **EP 1 729 388 B1**
(45) Veröffentlichungstag und Bekanntmachung des Hinweises auf die Patenterteilung: **16.03.2011**
(21) Anmeldenummer: 06011231.5
(22) Anmeldetag: 31.05.2006
(51) Int. Cl.: H02G 3/32

(54) **Befestigungsvorrichtung für mehrere Leitungen**
Line fixation device
Dispositif de fixation d'une ligne

(30) Priorität: 01.06.2005 DE 202005008570 U
(43) Veröffentlichungstag der Anmeldung: 06.12.2006
(73) Patentinhaber: TRW Automotive Electronics & Components GmbH, 78315 Radolfzell (DE)
(72) Erfinder: Jatzke Stefan, 67280 Ebertsheim (DE); Hofmann Jürgen, 67304 Eisenberg (DE); Loewe Hubert, 66919 Weselberg (DE)
(74) Vertreter: Prinz & Partner

(56) Entgegenhaltungen:
- DE-B- 1 260 895
- DE-C1- 19 735 509
- JP-A- 8 028 756
- US-A- 2 361 943

## Beschreibung

Die Erfindung betrifft eine Befestigungsvorrichtung für mehrere Leitungen nach dem Oberbegriff des Anspruchs 1.

Zur Befestigung von Leitungen wie Hydraulikleitungen und elektrischen Leitungen in Fahrzeugen, insbesondere an einer Fahrzeugkarosserie, sind unterschiedliche Befestigungsvorrichtungen bekannt, an die verschiedene Anforderungen gestellt werden. Zum einen sollen sie selbst in höheren Temperaturbereichen ausreichende Haltekräfte für Leitungen bereitstellen. Zum anderen sollen sie jedoch auch kostengünstig hergestellt werden können und keine scharfen Kanten aufweisen, um ein Verletzungsrisiko für einen Monteur zu minimieren.

Eine Befestigungsvorrichtung mit einem biegeelastischen Halteblock ist aus der DE-U-89 00 984 bekannt. Die Befestigungsvorrichtung weist zwar einen Stabilisierungskörper auf, die Haltekräfte für die Leitungen sind jedoch alleine durch das Material und die Form des Halteblocks vorgegeben. Zur Erhöhung der Haltekräfte könnte ein steiferes Material für den Halteblock gewählt werden, was sich jedoch negativ auf dessen Dämpfungseigenschaften auswirkt.

Eine Befestigungsvorrichtung mit den Merkmalen des Oberbegriffs des Anspruchs 1 ist aus der JP 08 028756 A bekannt. Die Befestigungsvorrichtung weist zwei gleichförmige Halbkörper aus Kunststoff mit halbrunden Ausnehmungen auf. Zwischen die Halbkörper ist ein zangenartiges Verstärkungsteil eingefügt.

Die US 2 361 943 zeigt eine Befestigungsvorrichtung für Metallleitungen, die zwei gegeneinander verschraubte Halteteile mit außenliegenden Metallverstärkungen aufweist. In den isolierenden Halteteilen sind Kanäle für die Metallleitungen gebildet, in denen Kontaktstreifen zur Kontaktierung der Metallleitungen angeordnet sind.

Aus der DE 197 35 509 C1 ist eine Schelle zur Befestigung von Rohren bekannt, die als federnde Metallklammer mit zwei Schenkeln ausgebildet ist. Ein ebenfalls zwei Schenkel bildendes Einlegeteil aus elastischem Kunststoff weist Aufnahmen für die Rohre und Vorsprünge auf, die mit der Metallklammer einen Formschluß eingehen.

Die DE 12 60 895 B betrifft eine Klemmschelle zum Verbinden von nebeneinander verlaufenden Schläuchen. Die Klemmschelle besteht aus zwei gleichen Hälften, die aus Federstahl oder Kunststoff gebildet sein können.

Die Aufgabe der Erfindung besteht darin, eine Befestigungsvorrichtung für mehrere Leitungen bereitzustellen, die kostengünstig ist und gleichzeitig obige Anforderungen erfüllt.

Zu diesem Zweck sieht die Erfindung eine Befestigungsvorrichtung der eingangs genannten Art mit den kennzeichnenden Merkmalen des Anspruchs 1 vor. Das Verstärkungsteil aus Metall, Blech oder einem härteren Kunststoff ist zumindest teilweise in der Kunststoffschicht eingebettet und umgreift mit den C-förmigen Abschnitten die Leitungen mit einer konstanten Haltekraft, wodurch die Leitungen sicher festgehalten werden und eine zuverlässige Befestigungsvorrichtung für die Leitungen bereitgestellt ist. Somit kann die Kunststoffschicht vorteilhaft aus einem sehr weichen Material gebildet werden.

Vorzugsweise umgibt die Kunststoffschicht das Verstärkungsteil bis auf einen Befestigungsabschnitt vollständig. Scharfe Kanten des Verstärkungsteils, das z.B. aus Metall ausgebildet ist, sind von der Kunststoffschicht bedeckt, so daß das Verletzungsrisiko für einen Monteur minimiert wird. Ferner sind die von der Kunststoffschicht umgebenden Leitungen von den Vibrationen der Fahrzeugkarosserie entkoppelt, d.h. die Kunststoffschicht, die das Verstärkungsteil umgibt, wirkt als Vibrationsdämpfer.

Das Verstärkungsteil ist bevorzugt aus Metall. Metall ist auch in höheren Temperaturbereichen temperaturbeständig, so daß ein Nachlassen der Haltekräfte ausbleibt.

Alternativ ist das Verstärkungsteil aus Kunststoff, beispielsweise ein glasfaserverstärktes Polyamid. Der als Verstärkungsteil eingesetzte Kunststoff ist dabei härter und temperaturbeständiger als die Kunststoffschicht, die das Verstärkungsteil umgibt.

Gemäß einer Ausführungsform sind Spalte zum Einbringen der Leitungen vorgesehen. Dieser ermöglicht ein einfaches Einbringen der Leitungen, ohne daß z.B. klappenförmige Elemente geöffnet und nach dem Einbringen der Leitungen erneut geschlossen werden müssen.

Vorzugsweise hat jede Aufnahme eine Umfangswand, die die eingebrachte Leitung umgibt und biegsame Fortsätze aufweist, die sich nach innen erstrecken. Die Fortsätze ermöglichen, daß Leitungen mit unterschiedlichen Leitungsdurchmessern eingebracht und sicher gehalten werden können. So sind die Fortsätze bei einer Leitung mit einem kleinen Durchmesser nicht oder unwesentlich umgebogen und berühren die Außenseite der Leitung mit ihrer Spitze, wohingegen die Fortsätze bei einem größeren Leitungsdurchmesser umgebogen sind. In beiden Fällen wird die Leitung sicher und fest umgriffen.

Weitere Merkmale und Vorteile der Erfindung ergeben sich aus der nachfolgenden Beschreibung und den Zeichnungen. Die Erfindung wird nachfolgend anhand der bevorzugten Ausführungsform beschrieben. In den Zeichnungen zeigen:
- Figur 1 eine perspektivische Ansicht einer erfindungsgemäßen Befestigungsvorrichtung,
- Figur 2 eine Seitenansicht der Befestigungsvorrichtung,
- Figur 3 eine Schnittansicht der Befestigungsvorrichtung entlang der Linie III-III in Figur 2,
- Figur 4 eine Seitenansicht der Befestigungsvorrichtung, und
- Figur 5 eine perspektivische Ansicht eines Verstärkungsteils der Befestigungsvorrichtung.

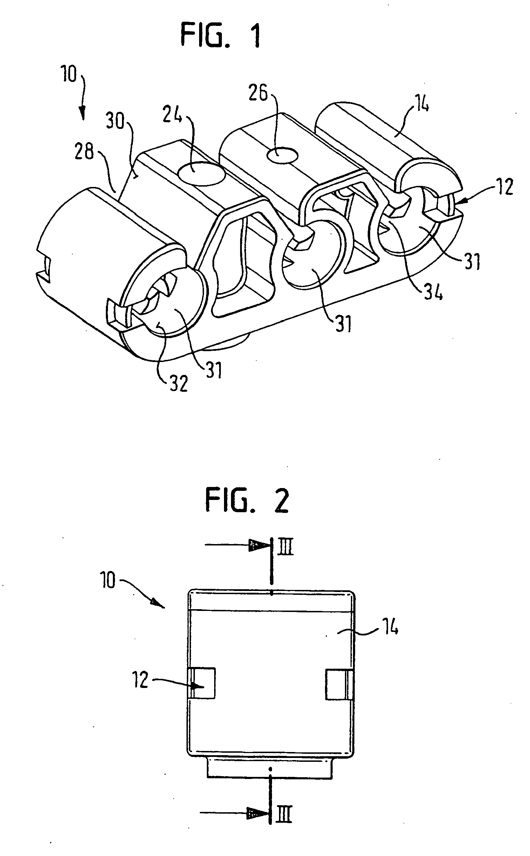

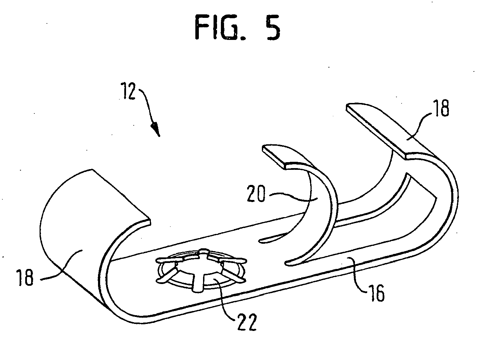

In Figur 1 ist eine Befestigungsvorrichtung 10 gezeigt, die drei Leitungen aufnehmen kann und aus einem Verstärkungsteil 12 (Figur 5) und einer Kunststoffschicht 14 besteht, die das Verstärkungsteil 12 umgibt.

Das innenliegende Verstärkungsteil 12 (Figur 5), das hier als Metallteil gezeigt ist, könnte auch aus einem glasfaserverstärkten Polyamid bestehen.

Das Verstärkungsteil 12 hat einen ebenen Abschnitt 16, der beidseitig in C-förmige Abschnitte 18 übergeht, wobei der ebene Abschnitt 16 ebenfalls einen im Querschnitt gesehen C-förmigen Abschnitt 20 aufweist, der dadurch gebildet ist, daß ein mittlerer Streifen des ebenen Abschnitts 16 ausgestanzt und nach oben gebogen ist. Deshalb ist die Breite des mittleren C-förmigen Abschnitts 20 kleiner als die der beiden äußeren C-förmigen Abschnitte 18.

Der ebene Abschnitt 16 weist ferner einen Befestigungsabschnitt 22 auf, der als Federteller ausgebildet ist und beim Anbringen der Befestigungsvorrichtung 10 an einem nicht gezeigten Bolzen angreifen kann.

Das Verstärkungsteil 12 ist in die Kunststoffschicht 14 mit Ausnahme des Befestigungsabschnitts 22 eingebettet, d.h. die Kunststoffschicht 14 umgibt das Verstärkungsteil 12 bis auf den Befestigungsabschnitt 22, genauer gesagt bis auf axiale Stirnflächen (bezogen auf die Achse der weiter unten erläuterten Öffnung 24) des Befestigungsabschnitts 22, vollständig. Die Kunststoffschicht 14 ist dabei vorzugsweise eine gespritzte TPE-V-Schicht (thermoplastisches Elastomervulkanisat).

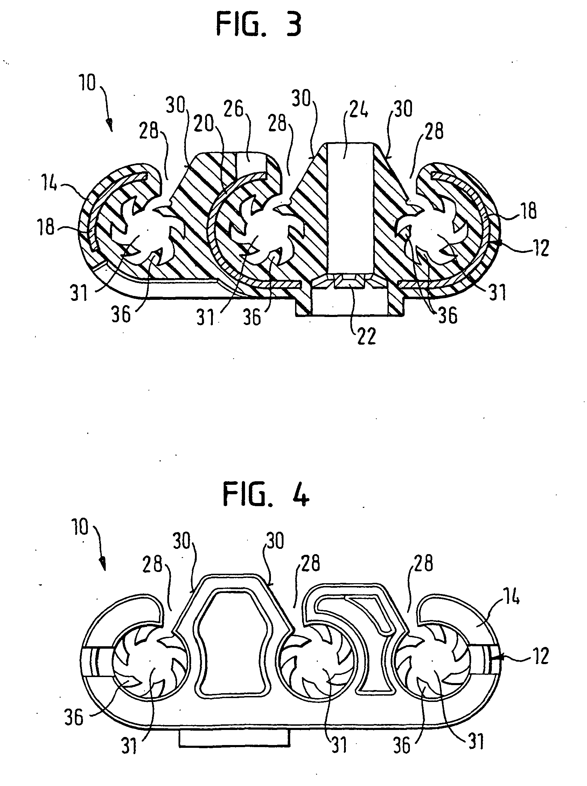

Die Unterseite (gemäß Figur 4) der Befestigungsvorrichtung 10 ist geradlinig ausgebildet, um eine ebene Auflage des Befestigungsvorrichtung 10 an der Fahrzeugkarosserie zu gewährleisten.

Die beiden äußeren C-förmigen Abschnitte 18 sind mit einer konstant dicken Kunststoffschicht 14 umgeben, so daß die Außenseiten der Befestigungsvorrichtung 10 abgerundet sind.

Die Oberseite (gemäß Figur 4) der Befestigungsvorrichtung 10 ist mit zwei zylindrischen Öffnungen 24, 26 versehen, wobei die erste Öffnung 24 sich über die gesamte Höhe der Befestigungsvorrichtung 10 erstreckt und der Aufnahme des Bolzens (nicht gezeigt) dient. Die zweite Öffnung 26 hingegen ist fertigungstechnisch notwendig, um das Verstärkungsteil 12 beim Spritzen zu halten, und erstreckt sich deshalb nur bis zum Verstärkungsteil 12.

Dadurch, daß der Bolzen in der Kunststoffschicht 14 aufgenommen ist, reduziert sich der Vibrationseintrag von der Fahrzeugkarosserie, an den die Befestigungsvorrichtung 10 mit dem Bolzen angebracht wird. Außerdem übertragen sich Vibrationen oder Pulsationen der eingebrachten Leitungen nicht so leicht auf den Bolzen. Die Anordnung und Ausgestaltung der Öffnung 24 hat darüber hinaus den Vorteil, daß der senkrecht zwischen zwei Leitungsaufnahmen angeordnete Bolzen sowohl während des Einbringens als auch im montierten Zustand der Leitungen als Abstützung für die Leitungen dient.

Die Oberseite der Befestigungsvorrichtung 10 ist zudem von drei länglichen Spalten 28 durchbrochen (Figur 1), die die gesamte Breite der Befestigungsvorrichtung 10 einnehmen und jeweils eine geneigte Wand 30 aufweisen, die ein Einbringen der Leitungen erleichtern. Die länglichen Spalte 28 gehen in eine jeweils zylinderförmige Aussparung 31 über, die von einer Umfangswand 32 umgeben ist.

Jede Umfangswand 32 ist im mittleren Bereich 34 mit Fortsätzen 36 versehen, wobei sich die jeweils sechs sichelartigen Fortsätze 36 nach innen erstrecken (Figur 3). Die biegsam ausgebildeten Fortsätze 36 können sich an unterschiedliche Leitungsdurchmesser anpassen; wenn eine Leitung mit einem großem Durchmesser eingebracht ist, sind die Fortsätze 36 umgebogen und lehnen sich an die Umfangswand 32 an, wohingegen sie bei einer Leitung mit einem kleinem Durchmesser nicht oder nur unwesentlich umgebogen sind. In beiden Fällen üben die Fortsätze 36 Haltekräfte auf die Leitung aus, und die Leitung ist sicher und fest gehalten.

Da die Fortsätze 36 nur in einem mittleren Bereich 34 der Umfangswand 32 angeordnet sind, kann sich die eingebrachte Leitung an eine an die Befestigungsvorrichtung 10 anschließende Richtungsänderung bereits in den äußeren Bereichen anpassen. So sind größere Richtungsänderungen möglich, ohne daß die Leitung geknickt werden muß, was die Lebensdauer der Leitung verringern würde.

Die Befestigungsvorrichtung 10 kann entweder nach oder vor dem Anbringen der Leitungen an der Fahrzeugkarosserie mittels des Bolzens (nicht gezeigt), der sich durch die Öffnung 24 erstreckt, befestigt werden. Genausogut könnte die Befestigungsvorrichtung 10 mittels eines Rastfußes (nicht gezeigt) in einer Bohrung an der Fahrzeugkarosserie angebracht werden.

Bei der Montage der Befestigungsvorrichtung 10 ist das Verletzungsrisiko eines Monteurs minimiert, da scharfe Kanten des Verstärkungsteils 12 von der Kunststoffschicht 14 bedeckt sind. Ferner kann die Befestigungsvorrichtung 10 die Leitungen aufgrund des Verstärkungsteils 12 dauerhaft festhalten.

Beim Herstellen der Befestigungsvorrichtung 10 wird das Verstärkungsteil 12 mit einer automatischen Zuführung in eine Spritzform eingelegt. Das Verstärkungsteil 12 wird von der Kunststoffschicht 14 umspritzt, so daß das Verstärkungsteil 12 außer in den Bereichen, in denen es im Spritzwerkzeug gehalten wurde (Figuren 2 und 4), und am Befestigungsabschnitt 22 von dieser umgeben ist.

Wie bereits erwähnt und in den Figuren 1, 3 und 4 zu erkennen ist, umgibt die Kunststoffschicht 14 das Verstärkungsteil 12 - mit Ausnahme des Befestigungsabschnitts 22 - vollständig, d.h. insbesondere auch auf den durch die Achsen der zylinderförmigen Aussparungen 31 definierten Stirnseiten der Befestigungsvorrichtung 10 (siehe Figuren 1 und 4). Die Kunststoffschicht 14 bildet an diesen Stirnseiten eine zusammenhängende Wand, was einerseits maßgeblich zur Gesamtstabilität der Befestigungsvorrichtung 10 beiträgt und andererseits den Monteur bestmöglich vor den stirnseitigen Kanten des Verstärkungsteils 12 schützt.

## Patentansprüche

1. Befestigungsvorrichtung für mehrere Leitungen, mit einem Verstärkungsteil (12) und einer Kunststoffschicht (14), die das Verstärkungsteil (12) wenigstens teilweise umgibt, wobei für jede Leitung eine Aufnahme vorgesehen ist und das Verstärhungsteil (12) für jede Aufnahme einen im Querschnitt gesehen C-förmigen Abschnitt (18, 20) aufweist, **dadurch gekennzeichnet, daß** das Verstärkungsteil (12) die jeweilige Leitung beabstandet umgibt.

2. Befestigungsvorrichtung nach Anspruch 1, **dadurch gekennzeichnet, daß** drei Aufnahmen für drei Leitungen vorgesehen sind.

3. Befestigungsvorrichtung nach Anspruch 1 oder 2, **dadurch gekennzeichnet, daß** das Verstärkungsteil (12) einen ebenen Abschnitt (16) aufweist und einer der C-förmigen Abschnitte (20) **dadurch** gebildet ist, daß ein mittlerer Streifen des ebenen Abschnitts (16) ausgestanzt und nach oben gebogen ist.

4. Befestigungsvorrichtung nach einem der vorhergehenden Ansprüche, **dadurch gekennzeichnet, daß** die Aufnahmen durch zylinderförmige Aussparungen (31) gebildet sind und sich alle C-förmigen Abschnitte (18, 20) wenigstens um den halben Umfang der Aussparungen (31) erstrecken.

5. Befestigungsvorrichtung nach einem der vorhergehenden Ansprüche, **dadurch gekennzeichnet, daß** ein Befestigungsabschnitt (22) vorgesehen ist, wobei die Kunststoffschicht (14) das Verstärkungsteil (12) bis auf den Befestigungsabschnitt (22) vollständig umgibt.

6. Befestigungsvorrichtung nach einem der vorhergehenden Ansprüche, **dadurch gekennzeichnet, daß** das Verstärkungsteil (12) aus Metall ist.

7. Befestigungsvorrichtung nach einem der Ansprüche 1 bis 5, **dadurch gekennzeichnet, daß** das Verstärkungsteil (12) aus Kunststoff ist.

8. Befestigungsvorrichtung nach einem der vorhergehenden Ansprüche, **dadurch gekennzeichnet, daß** die Kunststoffschicht (14) gespritzt ist.

9. Befestigungsvorrichtung nach einem der vorhergehenden Ansprüche, **dadurch gekennzeichnet, daß** Spalte (28) zum Einbringen der Leitungen vorgesehen sind.

10. Befestigungsvorrichtung nach einem der vorhergehenden Ansprüche, **dadurch gekennzeichnet, daß** jede Aufnahme eine Umfangswand (32) hat, die die eingebrachte Leitung umgibt und biegsame Fortsätze (36) aufweist, die sich nach innen erstrecken.

## Claims

1. An attachment device for a plurality of lines, comprising a reinforcement part (12) and a synthetic layer (14) which at least partially surrounds the reinforcement part (12), a retainer being provided for each line, and the reinforcement part (12) having, for each retainer, a C-shaped section (18, 20) as viewed in cross-section, **characterized in that** the reinforcement part (12) surrounds the respective line, spaced apart therefrom.

2. The attachment device according to claim 1, **characterized in that** three retainers for three lines are provided.

3. The attachment device according to claim 1 or 2, **characterized in that** the reinforcement part (12) includes a flat section (16) and one of the C-shaped sections (20) is formed by a central strip of the flat section (16) being stamped out and bent upwards.

4. The attachment device according to any of the preceding claims, **characterized in that** the retainers are formed by cylindrical recesses (31) and all C-shaped sections (18, 20) extend at least about half the periphery of the recesses (31).

5. The attachment device according to any of the preceding claims, **characterized in that** an attachment section (22) is provided, the synthetic layer (14) fully surrounding the reinforcement part (12) except for the attachment section (22).

6. The attachment device according to any of the preceding claims, **characterized in that** the reinforcement part (12) is made from metal.

7. The attachment device according to any of claims 1 to 5, **characterized in that** the reinforcement part (12) is made from a synthetic material.

8. The attachment device according to any of the preceding claims, **characterized in that** the synthetic layer (14) is injection-molded.

9. The attachment device according to any of the preceding claims, **characterized in that** gaps (28) are provided for inserting the lines.

10. The attachment device according to any of the preceding claims, **characterized in that** each retainer has a peripheral wall (32) which surrounds the inserted line and includes flexible appendages (36) extending inwards.

## Revendications

1. Dispositif de fixation pour plusieurs conduites, comportant une pièce de renforcement (12) et une couche de matière plastique (14) qui entoure au moins partiellement la pièce de renforcement (12), un logement étant prévu pour chaque conduite et la pièce de renforcement (12) présentant pour chaque logement un tronçon (18, 20) en forme de C, vu en section transversale, **caractérisé en ce que** la pièce de renforcement (12) entoure la conduite respective avec espacement.

2. Dispositif de fixation selon la revendication 1, **caractérisé en ce que** trois logements sont prévus pour trois conduites.

3. Dispositif de fixation selon la revendication 1 ou 2, **caractérisé en ce que** la pièce de renforcement (12) présente un tronçon (16) plat et un des tronçons (20) en forme de C est formé par le fait qu'une bande médiane du tronçon (16) plat est estampée et repliée vers le haut.

4. Dispositif de fixation selon l'une quelconque des revendications précédentes, **caractérisé en ce que** les logements sont formés par des évidements (31) de forme cylindrique et que tous les tronçons (18, 20) en forme de C s'étendent au moins autour de la demi-périphérie des évidements (31).

5. Dispositif de fixation selon l'une quelconque des revendications précédentes, **caractérisé en ce qu'**il est prévu un tronçon de fixation (22), la couche de matière plastique (14) entourant entièrement la pièce de renforcement (12) à l'exception du tronçon de fixation (22).

6. Dispositif de fixation selon l'une quelconque des revendications précédentes, **caractérisé en ce que** la pièce de renforcement (12) est en métal.

7. Dispositif de fixation selon l'une quelconque des revendications précédentes, **caractérisé en ce que** la pièce de renforcement (12) est en matière plastique.

8. Dispositif de fixation selon l'une quelconque des revendications précédentes, **caractérisé en ce que** la couche de matière plastique (14) est extrudée.

9. Dispositif de fixation selon l'une quelconque des revendications précédentes, **caractérisé en ce que** des fentes (28) sont prévues pour introduire les conduites.

10. Dispositif de fixation selon l'une quelconque des revendications précédentes, **caractérisé en ce que** chaque logement a une paroi périphérique (32) qui entoure la conduite introduite et présente des prolongements (36) souples qui s'étendent vers l'intérieur.
